# EUROPEAN PATENT SPECIFICATION

(11) **EP 1 937 783 B1**
(45) Date of publication and mention of the grant of the patent: **23.11.2016**
(21) Application number: 06817047.1
(22) Date of filing: 17.10.2006
(51) Int. Cl.: C11D 11/00, C09D 9/00, C11D 7/50, C11D 7/32, C11D 7/26, C11D 7/34, C11D 3/43, C11D 3/30, C11D 3/20

(54) **FLOOR STRIPPER/CLEANER CONTAINING ORGANIC ACID-BASE PAIR**
BODENABBEIZER/REINIGUNGSMITTEL MIT ORGANISCHEM SÄUREBASIERTEM PAAR
DECAPANT/NETTOYANT POUR LES SOLS CONTENANT UNE PAIRE ACIDE-BASE ORGANIQUE

(30) Priority: 18.10.2005 US 254233; 18.10.2005 US 254235
(43) Date of publication of application: 02.07.2008
(73) Proprietor: ECOLAB INC., St. Paul, MN 55102-2233 (US)
(72) Inventor: HEI, Robert, D.P., Baldwin, WI 54002 (US); LEAFBLAD, Brian, R., St. Paul, MN 55106 (US); LI, Minyu, Oakdale, MN 55128 (US); CARLSON, Lauren, K., St. Paul, MN 55116 (US); KRIENS, Nicola, 46539 Dinslaken (DE); LIKO, Christian, F., 46514 Schernbeck (DE); MOLINARO, Matthew, P., Inver Grove Heights, MN 55076 (US); LANGE, Steven, J., St. Paul, MN 55116 (US)
(74) Representative: Godemeyer Blum Lenze Patentanwälte Partnerschaft mbB - werkpatent
(86) International application number: PCT/US2006/040521
(87) International publication number: WO 2007/047656

(56) References cited:
- WO-A-2006/113144
- US-A- 5 096 610
- US-A- 5 342 551
- US-A- 5 637 559
- US-A- 5 849 682
- US-A1- 2005 130 869

## Description

### BACKGROUND OF THE INVENTION

This invention relates to floor stripping, to the non-destructive removal of floor finishes, and to floor finish scrub and recoat procedures.

Floor strippers are used to remove worn or discolored floor finishes from flooring substrates (e.g., vinyl composition tiles) so that a new finish may be applied. Floor scrub and recoat materials are used to carry out a procedure sometimes referred to as "deep scrubbing" so that a fresh layer of floor finish may be applied atop an existing floor finish. References relating to various stripping or cleaning agents (some of which are said to be floor strippers or floor cleaners) include U.S. Patent Nos. 3,993,804 (McReady et al.) 4,187,191 (Simpson, Jr.), 5,080,831 (VanEenam '831), 5,342,551 (Ruckle), 5,419,848 (VanEenam '848), 5,637,559 (Koreltz et al.), 5,728,666 (Vitomar '666), 5,744,440 (Liu), 5,849,682 (VanEenam '682), 5,851,972 (Distaso et al.), 6,465,405 B1 (Vitomar '405), 6,544,942 B1 (Smith et al.), 6,583,101 B1 (Wiseth et al.) and 6,586,380 B2 (Marquis et al.), U.S. Patent Application Publication No. US 2003/0125226 A1 (Lewis), Published PCT Application Nos. WO 98/17734 (Brent International PLC) and WO 2004/090085 A1 (Vocfree, Inc.), Henkel Surface Technologies Technical Process Bulletin No. 238828 (Form Revised 4 June 2001) and *Benzyl Alcohol Paint Stripping*, available on the Internet at http://p2library.nfesc.navy.mil/P2_Opportunity_Handbook/5_9.html (Revision Date 8/03).

### BRIEF SUMMARY OF THE INVENTION

The invention relates to a floor finish stripper or scrub and recoat composition according to claim 1.

### DETAILED DESCRIPTION

The phrase "hardenable floor finish" refers to an applied liquid coating that through a chemical or physical process (including solvent evaporation or other drying processes, photochemical reactions, electrochemical reactions, radical processes, thermal processes, ionic processes, moisture cure processes or multiple-component (e.g., two- or three-component) crosslinking processes) can become dried, crosslinked or otherwise cured *in situ* to form a tack-free film on a floor. The phrase "hardened floor finish" refers to such a dried, cross-linked or otherwise cured floor finish.

The phrase "stripping a floor finish" refers to removing, at such time as it may be desired to do so, a hardened floor finish from an underlying installed flooring substrate without removing substantial portions of the flooring substrate. Such stripping preferably employs minimally abrasive measures such as mop or spray application of the disclosed stripper followed after a brief standing time by rinsing using, e.g., water or a detergent solution. If desired, stripping may be accompanied by more abrasive but flooring-safe measures such as abrading the finish during the standing time using, e.g., a nonwoven floor scrub pad, but may be carried out without requiring a flooring-damaging finish removal step such as sanding.

The phrases "deep scrubbing" and "scrubbing and recoating" refer to applying, at such time as it may be desired to do so, a composition containing a floor finish solvent to a hardened floor finish atop an underlying installed flooring substrate without removing all of the hardened floor finish, and cleaning the hardened floor finish surface sufficiently so that an additional layer or layers of hardenable floor finish may be applied thereto and hardened.

The word "concentrate" refers to a composition intended to be diluted with water before use. The phrase "substantially nonchlorinated" refers to a concentrate that does not contain objectionable quantities of chlorinated solvents (e.g., methylene chloride) whose presence might pose a health or environmental hazard.

The phrase "floor finish solvent" refers to an organic liquid that can dissolve, soften or otherwise assist in removing a hardened floor finish from a floor, and includes organic cosolvents that assist in dissolving a solvent in a concentrate, help maintain the concentrate in a desirable physical state during storage, ease dilution of the concentrate with water, reduce cost, reduce odor or provide some other desirable packaging, storage or use benefit.

The phrase "sparingly water-soluble" refers to a material that when mixed by itself with water at room temperature and pressure at a mixing ratio less than 1:20 will not form a clear, homogenous solution but which can form a clear, homogenous solution in the presence of sufficient acidic coupler.

The phrase "not corrosive to skin" refers to a composition which, when tested with the CORROSITEX™ in-vitro skin corrosion assay from InVitro International, does not break through the assay membrane in less than sixty minutes of contact.

The phrase "homogenous aqueous liquid phase and no or low foaming during shaking" refers to a composition that contains or is diluted to contain at least 75 wt. % water and which when 7.5 milliliters (ml) of such composition or diluted composition is placed in a 50 ml Erlenmeyer flask, manually shaken for one minute, and allowed to stand for one minute, will not completely separate into two or more phases and will not exhibit more than 10 ml of visible foam.

Representative floor finish solvents include, benzyl alcohol, dibasic esters, essential oils, dialkyl carbonates, ethylene glycol monobutyl ether, diethylene glycol monobutyl ether, ethylene glycol phenyl ether, propylene glycol phenyl ether, and mixtures thereof, like benzyl alcohol (∼4% water solubility); ethylene glycol phenyl ether (2.3% water solubility, commercially available as DOWANOL EPh™ from Dow Chemical Co.) and propylene glycol phenyl ether (1.1% water solubility, commercially available as DOWANOL PPh™ from Dow Chemical Co.); essential oils (e.g., benzaldehyde, pinenes (alphas, betas, etc.), terpineols, terpinenes, carvone, cinnamealdehyde, borneol and its esters, citrals, ionenes, jasmine oil, limonene, dipentene, linalool and its esters); dibasic esters such as dimethyl adipate, dimethyl succinate, dimethyl glutarate (often available in a mixture, including products available under the trade designations DBE™, DBE-3, DBE-4, DBE-5, DBE-6, DBE-9, DBE-IB, and DBE-ME from DuPont Nylon), dimethyl malonate, diethyl adipate, diethyl succinate, diethyl glutarate, dibutyl succinate, and dibutyl glutarate; dialkyl carbonates such as dimethyl carbonate, diethyl carbonate, dipropyl carbonate, diisopropyl carbonate, and dibutyl carbonate; and mixtures thereof. The water solubilities noted above are room temperature values. The floor finish solvent(s) (including cosolvent(s), if employed), may collectively represent for example at least 20 %, at least 30 %, at least 40 %, at least 50%, at least 60 %, at least 70 %, at least 80 % of the total concentrate weight.

Tap water, deionized water, distilled water or water in any other suitable form may be used in the disclosed compositions and methods. The use of softened water or of water having a low overall hardness level may facilitate application of the disclosed compositions to a hardened floor finish and limit dewetting. When the disclosed compositions are formulated as a concentrate, water may represent for example at least 5%, at least 10 %, at least 20%, at least 30 %, at least 40 %, at least 50%, at least 60 %, at least 70 % or at least 80 % of the total concentrate weight.

A C₁₀ aliphatic acid is employed in the disclosed compositions and methods.

N-decanoic acid is a preferred C₁₀ aliphatic acid. C₁₀ aliphatic acids of any suitable purity level may be employed. For example, a fatty acid containing 3 wt. % or more of a C₁₀ aliphatic acid such as coconut oil (5-10 wt. % n-decanoic acid) or palm kernel oil (3-7 wt. % n-decanoic acid) may be employed.

The C₁₀ aliphatic acid may have any suitable purity level. Preferably, however, a C₁₀ aliphatic acid of at least 50% purity is employed. When the disclosed compositions are formulated as a concentrate, the C₁₀ aliphatic acid represents 1 to 25 % of the total concentrate weight. The C₁₀ aliphatic acid may be accompanied by other acids (e.g., mineral acids) or by salts of aromatic, aliphatic or mineral acids (e.g., sodium benzene sulfonate). However, the inclusion of such other acids or acid salts may make the stripper/cleaner less environmentally friendly, or less effective when used at a moderate pH. Preferably, the C₁₀ aliphatic acid is at least 50 % of the total weight of acids and salts of acids in the disclosed compositions.

A variety of organic amines may be employed in the disclosed compositions and methods. Representative organic amines include, but are not limited to: low molecular weight (e.g., C₁₋₁₂) organoamines and substituted organoamines (e.g., alkanolamines) such as monoethanolamine, diethyl ethanolamine, triethanolamine, 1,2-diaminoethane, 1,2-diaminopropane, N-benzylethanolamine, 2-aminomethylpropanol, furfurylamine, tetrahydrofurfurylamine, and mixtures thereof. When the disclosed compositions are formulated as a concentrate, the organic amine represents for example 1 to 10% of the total concentrate weight. The amine amount may also be expressed in terms of the molar equivalent ratio of acid to amine. For example, acid:amine molar equivalent ratios of about 0.5:1 to about 1.5:1 may be employed. Often it will be desirable to adjust the amine amount to obtain a desired pH in the final concentrate or use-solution. The pH is 2 to 11, preferably 4 to 10, or more preferably 5 to 9. The use of excessive amine in the floor stripper/cleaner concentrate or use-solution can make the composition corrosive to skin, and can subject a concentrate having such corrosive properties to much more stringent packaging requirements. The organoamine may be accompanied by other amines (e.g., inorganic amines) or by salts of organic or inorganic amines. However, the inclusion of amine salts may make the stripper/cleaner less environmentally friendly, and the inclusion of inorganic amines may make the composition more prone to dewetting. Preferably the organoamines are at least 50 % of the total weight of amines and salts of amines.

The disclosed compositions may also contain one or more surfactants. Representative surfactants will be familiar to those skilled in the art, and include, not are not limited to: anionic, cationic, amphoteric, and nonionic surfactants, and mixtures thereof. Exemplary surfactants are described in U.S. Patent No. 6,544,942 B 1. The amount of surfactant may vary depending on factors such as the types and amounts of other ingredients in the disclosed composition, the desired dilution level, and other factors that will be familiar to those skilled in the art. As a general guide, the amount of surfactant may be about 0.1 to about 20 %, about 0.1 to about 15 % or about 0.1 to about 10 % of the total concentrate weight.

The disclosed compositions may contain other adjuvants including biocides, abrasive particles, chelants, builders, defoamers, fragrances, dyes, indicators, colorants, thickeners, anticorrosion additives, antirust additives, light stabilizers, and antioxidants. The types and amounts of such adjuvants will be apparent to those skilled in the art.

The disclosed stripper/cleaners may be manufactured as concentrates intended to be diluted with water prior to use, as water-containing concentrates intended to be diluted with additional water prior to use, or as ready-to-use aqueous solutions that may be employed without dilution. Desirably, the floor stripper/cleaner forms a single phase when freshly stirred and maintains that single phase while stored in the container in which it will be sold, or at least for sufficient time (e.g., for one minute or more, two minutes or more, or five minutes or more) so that the composition may be stirred or otherwise mixed and then applied to a floor at the intended point of use before phase separation occurs.

The disclosed stripper/cleaners may be manufactured by mixing the ingredients in any convenient order. For example, the water, organic amine, surfactant (if employed), floor finish solvent, acid, and any other desired ingredients (e.g., dyes, fragrances, chelating agents, etc.) may be mixed together. The disclosed stripper/cleaners may be packaged in any convenient form including, but not limited to: bottles, drums, and dispensers intended to be carried by a user during stripper/cleaner application and dispensers intended to be replaceably installed in a mixing or dispensing device (e.g., a wall-mounted, freestanding or benchtop dispensing station). The types and design of suitable packaging will be familiar to those skilled in the art.

A variety of flooring substrates may be stripped using the disclosed method. Exemplary flooring substrates include, but are not limited to: resilient flooring substrates such as vinyl composition tiles, vinyl sheet flooring, linoleum, rubber sheeting, rubber tile, cork, synthetic sports flooring, and vinyl asbestos tile, and non-resilient flooring substrates such as terrazzo, concrete, wood flooring, bamboo, wood laminate, engineered wood products (e.g. wood epoxy blends, permanently coated substrates such as those available under the names PERGO™ and PARQUET™), stone, marble, slate, ceramic tile, grout, and dry shake flooring. Such flooring substrates may be installed at a variety of jobsites, including indoor and outdoor sites involving new or existing residential, commercial, and government- or agency-owned sites.

A variety of hardened floor finishes may be stripped or deep scrubbed using the disclosed method. Representative commercially available floor finishes include, but are not limited to: PADLOCK™, GEMSTAR LASER™, GEMSTAR POLARIS™, RIVET™, and TAJ MAHAL™ acrylic floor finishes, GLOSSTEK 100™ and ORION™ polyurethane floor finishes, and COURTMASTER II™, ISI STAR™, TUKLAR MEDICAL™ floor finishes, all from Ecolab Inc.; CORNERSTONE™ and TOPLINE™ acrylic floor finishes from 3M; BETCO BEST™ floor finish from Betco Corp.; HIGH NOON™ acrylic finish from Butchers; CITATION™ and CASTLEGUARD™ acrylic finishes from Buckeye International, Inc., COMPLETE™, SIGNATURE™, TECHNIQUE™ and VECTRA™ acrylic floor finishes from SC Johnson Professional Products; OVER AND UNDER™ floor sealer from S. C. Johnson Professional Products; SPLENDOR™, DECADE 90™, PRIME SHINE™ ULTRA and PREMIER™ acrylic finishes and FIRST ROUND and FORTRESS™ urethane acrylic finishes from Minuteman, International, Inc.; ACRYL-KOTE™ Seal and Finish and PREP Floor Seal from Minuteman, International, Inc.; ULTRA TC™ and UV I-FINISH™ UV-curable finishes from Minuteman, International, Inc; FLOORSTAR™ Premium 25 floor finish from ServiceMaster, Inc.; and UPPER LIMITS™ acrylic finish and ISHINE™ optically brightened floor finish from Spartan Chemical Co. Other suitable floor finishes may be based on film formers including No. AD200C1 polyester polyurethane formulation from Air Products and Chemicals, Inc.; LAROMER™ PE 22 WN polyester acrylate emulsion, LAROMER LR 8949 aqueous radiation curable aliphatic polyurethane dispersion and LAROMER LR 8983 aqueous radiation curable aromatic polyurethane dispersion, all from BASF Corp.; No. MG98-040 polyester polyurethane formulation from Bayer AG; MEGATRAN™ 205 zinc crosslinked acrylic dispersion and SYNTRAN™ 1580 zinc crosslinked acrylic dispersion from Interpolymer Corp.; MORGLO™ zinc crosslinked acrylic dispersion and MORGLO2™ acrylic styrene polymer emulsion, both from Omnova Solutions Inc.; STAY-CLAD™ 5900 hydroxyl-functional acrylic polymer dispersion from Reichhold, Inc.; DURAPLUS™ 2 modified acrylic low odor mixed-metal crosslinked polymer, DURAPLUS 3 zinc crosslinked acrylic dispersion, DURAGREEN™ MF1 metal free acrylic polymer emulsion, PRIMAL™ B-336AFK modified acrylic zinc crosslinked polymer, PRIMAL B-924ER zinc crosslinked, all acrylic polymer emulsion, PRIMAL E-2483 metal crosslinked acrylic polymer, PRIMAL E-3188 waterborne acrylic polymer dispersion, PRIMAL NT-2624 metal-free polymer, PRIMAL NT-6035 metal-free polymer, RHOPLEX™ B-924 all-acrylic metal-crosslinked floor polish polymer, RHOPLEX 1421 zinc crosslinked acrylic dispersion, RHOPLEX B-1604 metal-crosslinked modified acrylic polymer, RHOPLEX NT-2624 metal crosslinker-free modified acrylic polish, RHOPLEX 3479 low foaming metal-crosslinked modified acrylic polymer, ROSHIELD™ 3120 UV curable acrylate coating and UHS Plus™ metal-crosslinked modified acrylic polymer, all from Rohm & Haas Co.; VIAKTIN™ VTE 6155 aliphatic urethane acrylate, VTE 6165 aromatic urethane acrylate and VTE 6169 aliphatic polyester urethane radiation curing resins, all from Solutia, Inc.; Nos. 979-1 and 980-3 polyester polyurethane formulations from U.S. Polymers, Inc.; the ZVOC™ series ofUV curable coatings from UV Coatings Limited; No. G-2029 acrylic polyurethane formulation and NEORAD™ NR-3709 UV curable aliphatic urethane coating from Zeneca Resins; 98-283W urethane acrylate from Hans Rahn & Co.; and materials such as those described in U.S. Patent Nos. 4,517,330, 4,999,216, 5,091,211, 5,319,018, 5,453,451, 5,773,487, 5,830,937, 6,096,383, 6,197,844, 6,228,433. 6,316,535 B1, 6,544,942 B1, U.S. Patent Application Publication No. US 2002/0028621 A1, and in the patents cited therein. The floor finishes may include water-soluble or water-dispersible film formers such as metal-free acrylic finishes, acid-containing polymers crosslinked using transition metals, and water-soluble or water-dispersible multicomponent (e.g., two component) polyurethanes. The floor finish may contain mixtures of film formers.

If in concentrated form, the stripper/cleaner should be diluted with water prior to use, e.g., at an intended use location. Ordinary tap water, softened water or process water may be employed. The concentrate:water dilution ratio usually will be at least 1:1 by volume, for example at least 1:2, at least 1:3, at least 1:4, at least 1:5, at least 1:6, at least 1:8, at least 1:10 or more. A variety of mixing methods may be employed. Mixing in a mop bucket is one such method and may be preferred. The hardened floor finish can optionally be abraded with a suitably mild abrasive (e.g., a SCOTCH-BRITE™ Floor Maintenance pad from 3M) prior to applying the stripper/cleaner. The stripper/cleaner may be applied using techniques that will be familiar to those skilled in the art (e.g., using a flat or string mop, squeegee, roller or towel). The applied stripper/cleaner should be allowed to stand for a suitable time (e.g., for a minute or more, and typically up to about 5 minutes, up to about 10 minutes or up to about 20 minutes) while it softens or deep scrubs the floor finish. The composition (and, where stripping is intended, the softened finish) may be removed using a variety of techniques that will be familiar to those skilled in the art including vacuuming, mopping, scrubbing or wiping. The stripped floor or deep scrubbed floor finish may be allowed to dry and a layer or layers of floor finish applied thereto and caused or allowed to harden.

The invention is further illustrated in the following non-limiting examples, in which all parts and percentages are by weight unless otherwise indicated.
Examples 1 -13 were removed.

### Example 14

Three floor stripper/cleaner concentrates were made using the ingredients and amounts shown below in Table 14a:

**Table 14a**

| **Ingredient** | **Run 14-1, % x** | **Run 14-2, % x** | **Run 14-3, % x** | **Run 14-4, %** | **Run 14-5, % x** | **Run 14-6, % x** |
|---|---|---|---|---|---|---|
| Water | 73.8 | 62.1 | 58.5 | 51.1 | 62.1 | 58.5 |
| Monoethanolamine | 2.5 | 9.6 | -- | 2.5 | 9.6 | -- |
| Triethanolamine (85%) | -- | -- | 20 | -- | -- | 20 |
| Cumene sulfonic acid | 5.7 | -- | -- | -- | -- | -- |
| Decanoic acid | -- | -- | | 8.4 | -- | -- |
| Lactic acid | -- | 9.4 | -- | -- | 9.4 | -- |
| Ethylene glycol phenyl ether | 10.0 | 3.5 | 5.0 | 10.0 | 3.5 | 5.0 |
| Diethylene glycol monobutyl ether | 6.0 | 4.6 | 6.0 | 6.0 | 4.6 | 6.0 |
| Sodium xylene sulfonate | -- | 9.8 | -- | 20.0 | 9.8 | -- |
| Propylene glycol | -- | -- | 10 | -- | -- | 10 |
| Linear alcohol ethoxylate 1 | 2.0 | -- | -- | 2.0 | -- | -- |
| Linear alcohol ethoxylate 2 | -- | 1.0 | 0.5 | -- | 1.0 | 0.5 |

| | | | | | | |
|---|---|---|---|---|---|---|
| ¹ SURFONIC L12-6 from Huntsman Performance Products. ² SURFONIC L24-7 from Huntsman Performance Products. x = comparative example | | | | | | |

The concentrates were tested with the CORROSITEX™ in-vitro skin corrosion assay from InVitro International. In this assay, a color-changing fluid is placed beneath a biomembrane which provides a color change signal when a corrosive material degrades the membrane. Materials are considered corrosive if they break through the membrane in less than sixty minutes of contact. The assay uses a sodium hydroxide solution as a negative control. The assay results are shown below in Table 14b.

**Table 14b**

| **Formulation** | **Concentrate pH** | **Skin Corrosion Assay Result** |
|---|---|---|
| Run 14-1 | 9.5 | NOT CORROSIVE (Not DOT Regulated) |
| Run 14-2 | 10.0 | CORROSIVE (DOT Packing group III) |
| Run 14-3 | 9.5 | CORROSIVE (DOT Packing group III) |
| Run 14-4 | 7.5 | NOT CORROSIVE (Not DOT Regulated) |
| Run 14-5 | 10.0 | CORROSIVE (DOT Packing group III) |
| Run 14-6 | 9.5 | CORROSIVE (DOT Packing group III) |
| Sodium hydroxide solution | >13 | CORROSIVE (DOT Packing group II) |

As shown in Table 14b, the Run 14-1 and Run 14-4 floor stripper/cleaner was not corrosive in the skin corrosion assay, and could be shipped without requiring DOT-approved packaging.
Examples 15 to 18 were removed.

### Example 19

A series of concentrates was made using the ingredients and percentage amounts shown below in Tables 19a and 19b. The acid amounts were adjusted to provide a 0.8:1 (see Table 19a) or 1.2:1 (see Table 19b) equivalent ratio of acid:amine.

**Table 19a**

| **Ingredient** | **Run 19-1,%x** | **Run 19-2, % x** | **Run 19-3, %x** | **Run 19-4,%** | **Run 19-5, % x** | **Run 19-6, % x** |
|---|---|---|---|---|---|---|
| Monoethanolamine | 2.5 | 2.5 | 2.5 | 2.5 | 2.5 | 2.5 |
| Ethylene glycol phenyl ether¹ | 10.0 | 10.0 | 10.0 | 10.0 | 10.0 | 10.0 |
| Diethylene glycol monobutyl ether² | 6.0 | 6.0 | 6.0 | 6.0 | 6.0 | 6.0 |
| 40% active sodium xylene sulfonate³ | 20.0 | 20.0 | 20.0 | 20.0 | 20.0 | 20.0 |
| Linear alcohol ethoxylate⁴ | 2.0 | 2.0 | 2.0 | 2.0 | 2.0 | 2.0 |
| Lactic acid (C₃) | 3.4 | -- | -- | -- | -- | -- |
| Octanoic acid (C₈) | -- | 4.9 | -- | -- | -- | -- |
| Isononanoic acid (C₉) | -- | | 5.1 | -- | -- | |
| Decanoic acid (C₁₀) | -- | -- | -- | 5.8 | -- | -- |
| Coconut fatty acid (primarily C₁₂ and C₁₄) | -- | -- | -- | **--** | 7.4 | -- |
| tall oil fatty acid (primarily C₁₈ and C₁₆) | -- | -- | -- | -- | -- | 10.3 |
| Water, softened | 56.1 | 54.6 | 54.4 | 53.7 | 52.1 | 49.2 |

| | | | | | | |
|---|---|---|---|---|---|---|
| ¹ DOWANOL™ EPh from Dow Chemical Co. ² Butyl CARBITOL™ from Dow Chemical Co. ³ STEPANATE™ SXS from Stepan Chemical Co. ⁴ SURFONIC L12-6 from Huntsman Chemical Co. x = comparative example | | | | | | |

**Table 19b**

| **Ingredient** | **Run 19-7, % x** | **Run 19-8, % x** | **Run 19-9, % x** | **Run 19-10, %** | **Run 19-11, % x** | **Run 19-12,%x** |
|---|---|---|---|---|---|---|
| Monoethanolamine | 2.5 | 2.5 | 2.5 | 2.5 | 2.5 | 2.5 |
| Ethylene glycol phenyl ether | 10.0 | 10.0 | 10.0 | 10.0 | 10.0 | 10.0 |
| Diethylene glycol monobutyl ether | 6.0 | 6.0 | 6.0 | 6.0 | 6.0 | 6.0 |
| 40% active sodium xylene sulfonate | 20.0 | 20.0 | 20.0 | 20.0 | 20.0 | 20.0 |
| Linear alcohol ethoxylate | 2.0 | 2.0 | 2.0 | 2.0 | 2.0 | 2.0 |
| Lactic acid (C₃) | 5.0 | -- | -- | -- | -- | -- |
| Octanoic acid (C₈) | -- | 7.0 | -- | -- | -- | -- |
| Isononanoic acid (C₉) | -- | -- | 7.9 | -- | -- | -- |
| Decanoic acid (C₁₀) | -- | -- | -- | 8.4 | -- | -- |
| Coconut fatty acid (primarily C₁₂ and C₁₄) | -- | -- | -- | -- | 10.7 | -- |
| tall oil fatty acid (primarily C₁₈ and C₁₆) | -- | -- | -- | -- | -- | 14.9 |
| Water, softened | 54.5 | 52.5 | 51.6 | 51.1 | 48.8 | 44.6 |

| | | | | | | |
|---|---|---|---|---|---|---|
| x = comparative example | | | | | | |

The resulting concentrates were diluted with tap water at a 1:6 ratio by volume to form floor stripper/cleaner use-solutions containing about 0.5 % amine (monoethanolamine) and 2.5 % solvents (ethylene glycol phenyl ether and diethylene glycol monobutyl ether). The use-solutions were applied to tiles coated with 4 layers of ZINC FREE FLOOR FINISH from Ecolab Inc. which had been applied at a 50 m²/L (2000 ft²/gallon) coating rate. Foam rings were adhered to the tiles to provide similar enclosed circular areas. Each use-solution was placed inside a ring for a 5 or 10 minute contact time. The foam rings were removed, and the tiles rinsed with water. Stripping effectiveness was visually evaluated. The results are set out below in Table 19c and Table 19d.

**Table 19c**

| **Run No.** | **Acid added at 0.8:1 acid:amine ratio** | **Use-solution pH** | **Visual assessment 5 minute contact** | **Visual assessment 10 minute contact** |
|---|---|---|---|---|
| **19-1** | Lactic acid | 9.63 | 0-10% removal | 10-25% removal |
| **19-2** | Octanoic acid | 9.35 | 0-10% removal | 25-50% removal |
| **19-3** | Isononanoic acid | 9.30 | 10-25% removal | 25-50% removal |
| **19-4** | Decanoic acid | 9.1 | 25-50% removal | 75-100% removal |
| **19-5** | Coconut fatty acid | 9.24 | 0-10% removal | 10-25% removal |
| **19-6** | Tall oil fatty acid | 9.46 | 0-10% removal | 0-10% removal |

**Table 19d**

| **Run No.** | **Acid added at 1.2:1 acid:amine ratio** | **Use-solution pH** | **Visual assessment 5 minute contact** | **Visual assessment 10 minute contact** |
|---|---|---|---|---|
| **19-7** | Lactic acid | 5.6 | 0% removal | 0% removal |
| **19-8** | Octanoic acid | 7.2 | 0-10% removal | 10-25% removal |
| **19-9** | Isononanoic acid | 7.35 | 0-10% removal | 0-10% removal |
| **19-10** | Decanoic acid | 7.75 | 10-25% removal | 75-100% removal |
| **19-11** | Coconut fatty acid | 7.65 | 0-10% removal | 10-25% removal |
| **19-12** | Tall oil fatty acid | 7.45 | 0-10% removal | 10-25% removal |

After a 10 minute contact time, the decanoic acid floor stripper/cleaner removed nearly all of the finish from the tile, while the other floor stripper/cleaners did not. The decanoic acid formulations also retained their effectiveness at an approximately neutral pH.

### Example 20

Using the method of Example 19 and the amounts shown below in Table 20a, three concentrated floor stripper/cleaner formulations were prepared:

**Table 20a**

| **Ingredient** | **Run 20-1, %** | **Run 20-2, %** | **Run 20-3, %** |
|---|---|---|---|
| Water, softened | 53.7 | 52.5 | 60.5 |
| Monoethanolamine | 2.5 | 2.5 | 2.5 |
| Ethylene glycol phenyl ether | 10.0 | 10.0 | 7.0 |
| Diethylene glycol monobutyl ether | 6.0 | 6.0 | 6.0 |
| 40% active sodium xylene sulfonate | 20.0 | 20.0 | 15.0 |
| Linear alcohol ethoxylate | 2.0 | 2.0 | 2.0 |
| Decanoic acid (C₁₀) | 5.8 | 7.0 | 7.0 |

The resulting concentrates were diluted with tap water at a 1:6 ratio by volume to form floor stripper/cleaner use-solutions containing about 0.4 % amine (monoethanolamine) and 1.6% (Run Nos. 20-1 and 20-2) or 1.1 % (Run No. 20-3) ethylene glycol phenyl ether. The use-solutions were placed inside foam rings placed on tiles coated and evaluated for 5 and 10 minute contact times. Stripping effectiveness was visually evaluated. The results are set out below in Table 20b.

**Table 20b**

| **Run No.** | **Visual assessment 5-minute contact** | **Visual assessment 10-minute contact** |
|---|---|---|
| Run 20-1 | 25-50% removal | 75-100% removal |
| Run 20-2 | 25-50% removal | 75-100% removal |
| Run 20-3 | 10-25% removal | 50-75% removal |

Comparable stripping results were observed at both acid:amine ratios, and better stripping results were observed at higher solvent content.

## Claims

1. A floor finish stripper or scrub and recoat composition comprising:
a) 5 to 85 wt. % sparingly water-soluble floor finish solvent; wherein the solvent comprises at least one of the group consisting of: dibasic ester, essential oil, dialkyl carbonate, ethylene glycol monobutyl ether, diethylene glycol monobutyl ether, ethylene glycol phenyl ether, propylene glycol phenyl ether, and benzyl alcohol.
b) 1 to 93 wt. % water;
c) 1 to 25 wt. % acid in an amount sufficient to provide a homogenous aqueous liquid phase during shaking, the acid being a C₁₀ aliphatic acid; and
d) 1 to 10 wt. % organic amine so that the composition has a pH of 2 to 11 and the composition is not corrosive to skin.

2. The composition of claim 1, wherein the acid comprises a n-decanoic acid.

3. The composition of claim 1, wherein the organic amine comprises monoethanolamine.

4. The composition of claim 1, and further comprising surfactant.

5. The composition of claim 1, wherein the composition pH is 4 to 10.

6. The composition of claim 5, wherein the composition pH is 5 to 9

7. A method for stripping or deep scrubbing a floor finish comprising:
a) applying to the floor finish a composition according to claim 1b) allowing the applied composition to soften, dissolve or clean the floor finish; and c) removing the composition.

8. The method of claim 7, wherein the acid comprises n-decanoic acid.

9. The method of claim 7, wherein the organic amine comprises monoethanolamine.

10. The method of claim 7, and further comprising a surfactant.

11. The method of claim 7, wherein the composition is a single phase mixture.

## Patentansprüche

1. Zusammensetzung für das Abbeizen oder Scheuern und Neuauftragen von Fußbodenlack, umfassend:
a) 5 bis 85 Gew.-% an einem schwach wasserlöslichen FußbodenlackLösemittel; wobei das Lösemittel wenigstens eines aus der Gruppe umfasst, welche besteht aus: dibasischem Ester, etherischem Öl, Dialkylcarbonat, Ethylenglycolmonobutylether, Diethylenglycolmonobutylether, Ethylenglycolphenylether, Propylenglycolphenylether und Benzylalkohol.
b) 1 bis 93 Gew.-% Wasser;
c) 1 bis 25 Gew.-% Säure, in einer Menge, welche ausreicht, eine homogene, wässrige, flüssige Phase beim Schütteln bereitzustellen, wobei die Säure eine aliphatische C₁₀-Säure ist; und
d) 1 bis 10 Gew.-% an organischem Amin, sodass die Zusammensetzung einen pH-Wert von 2 bis 11 aufweist und die Zusammensetzung auf Haut nicht angreifend wirkt.

2. Zusammensetzung nach Anspruch 1, wobei die Säure eine n-Decansäure umfasst.

3. Zusammensetzung nach Anspruch 1, wobei das organische Amin Monoethanolamin umfasst.

4. Zusammensetzung nach Anspruch 1, und ferner umfassend Tensid.

5. Zusammensetzung nach Anspruch 1, wobei der pH-Wert der Zusammensetzung 4 bis 10 beträgt.

6. Zusammensetzung nach Anspruch 5, wobei der pH-Wert der Zusammensetzung 5 bis 9 beträgt.

7. Verfahren für das Abbeizen oder Tiefenscheuern eines Fußbodenlacks, umfassend:
a) das Auftragen einer Zusammensetzung nach Anspruch 1 auf den Fußbodenlack;
b) es der aufgetragenen Zusammensetzung zu erlauben, den Fußbodenlack aufzuweichen, aufzulösen oder zu reinigen; und
c) das Entfernen der Zusammensetzung.

8. Verfahren nach Anspruch 7, wobei die Säure n-Decansäure umfasst.

9. Verfahren nach Anspruch 7, wobei das organische Amin Monoethanolamin umfasst.

10. Verfahren nach Anspruch 7, und ferner umfassend ein Tensid.

11. Verfahren nach Anspruch 7, wobei die Zusammensetzung ein Einphasengemisch ist.

## Revendications

1. Composition de décapage ou de lavage et de revêtement de finition de sol, comprenant :
a) de 5 % en poids à 85 % en poids d'un solvant de finition de sol modérément soluble dans l'eau ; dans lequel le solvant comprend au moins un composant dans le groupe comprenant un ester dibasique, une huile essentielle, un carbonate de dialkyle, l'éther monobutylique d'éthylène glycol, l'éther monobutylique de diéthylène glycol, l'éther phénylique d'éthylène glycol, l'éther phénylique de propylène glycol et l'alcool benzylique ;
b) de 1 % en poids à 93 % en poids d'eau ;
c) de 1 % en poids à 25 % en poids d'acide en une quantité suffisante pour obtenir une phase liquide aqueuse homogène pendant le secouage, l'acide étant un acide aliphatique C₁₀ ; et
d) de 1 % en poids à 10 % en poids d'une amine organique de telle sorte que la composition présente un pH de 2 à 11 et que la composition ne soit pas corrosive pour la peau.

2. Composition selon la revendication 1, dans laquelle l'acide comprend un acide n-décanoïque.

3. Composition selon la revendication 1, dans laquelle l'amine organique comprend la monoéthanolamine.

4. Composition selon la revendication 1, et comprenant en outre un agent tensioactif.

5. Composition selon la revendication 1, dans laquelle le pH de la composition est compris entre 4 et 10.

6. Composition selon la revendication 5, dans laquelle le pH de la composition est compris entre 5 et 9.

7. Procédé de décapage ou de lavage en profondeur d'une finition de sol, comprenant les étapes suivantes :
a) appliquer à la finition de sol une composition selon la revendication 1 ;
b) laisser la composition appliquée ramollir, dissoudre ou nettoyer la finition de sol ; et
c) enlever la composition.

8. Procédé selon la revendication 7, dans lequel l'acide comprend un acide n-décanoïque.

9. Procédé selon la revendication 7, dans lequel l'amine organique comprend la monoéthanolamine.

10. Procédé selon la revendication 7, et comprenant en outre un agent tensioactif.

11. Procédé selon la revendication 7, dans lequel la composition est un mélange à phase unique.
